# EUROPEAN PATENT APPLICATION

(11) **EP 3 106 663 A1**
(43) Date of publication of application: **21.12.2016**
(21) Application number: 16169803.0
(22) Date of filing: 16.05.2016
(51) Int. Cl.: F03G 3/08, B60K 6/10

(54) **KINETIC ENERGY RECOVERY SYSTEM**

(30) Priority: 16.06.2015 GB 201510495
(71) Applicant: Edwards Limited, Crawley, Sussex RH10 9LW (GB)
(72) Inventor: SCHOFIELD, Nigel Paul, Burgess Hill, Sussex RH15 9TW (GB); GOODWIN, David John, Burgess Hill, Sussex RH15 9TW (GB)
(74) Representative: Norton, Ian Andrew

(57) **Abstract**

A kinetic energy recovery system is provided comprising a flywheel located in a first vacuum enclosure and a second vacuum enclosure comprising an inlet in fluid communication with the exhaust of the first vacuum enclosure and arranged to be maintained at a pressure less than atmosphere for reducing the pressure at the outlet of the first vacuum enclosure, the second vacuum enclosure comprising an exhaust through which gas can be pumped periodically at indeterminate intervals for maintaining the second vacuum enclosure at a pressure less than atmosphere. Thus an improved efficiency Kinetic energy system.

## Description

The present invention relates to a kinetic energy recovery system which may be used in a vehicle.

A kinetic energy recovery system (KERS) is used in vehicles to store energy by rotation of a flywheel, and is typically used to recover energy from a rotating part of the vehicle for example a drive shaft. In this example, a drive shaft is rotated by an engine to cause acceleration of the vehicle. During vehicle braking the energy of the rotating part is lost for instance as heat energy caused by friction between braking members. A kinetic energy recovery system is arranged to receive at least part of this lost energy and to return it to the rotating part when energy is required.

A recovery system comprises a flywheel supported for rotation about an axis. Energy is stored by increased rotational speed of the flywheel. The energy stored is proportional to the moment of inertia and the square of the angular velocity. In order to reduce the moment of inertia and therefore mass of the flywheel, the flywheel must be rotated at a high angular velocity to store sufficient energy (e.g. 100,000 rpm). At these high velocities, frictional resistance between a flywheel and ambient air generates large heat losses which decrease the efficiency of the recovery system. Therefore, the flywheel is located in a vacuum enclosure which is evacuated by a vacuum pump to reduce friction between the flywheel and the surrounding air. However, the energy required to operate the vacuum pump detracts from the energy which can be recovered and returned to other parts of the vehicle.

In a first aspect, the present invention provides a kinetic energy recovery system comprising: a flywheel supported for rotation on a shaft in a first vacuum enclosure for receiving energy from and dissipating energy to one or more parts of a vehicle; a first vacuum pumping arrangement comprising a vacuum pumping mechanism supported for rotation on the shaft in the first vacuum enclosure such that energy received from or dissipated to one or more parts of the vehicle causes a change in rotational speed of both the flywheel and the vacuum pumping mechanism, the first vacuum pumping arrangement arranged to exhaust gas through an outlet in the first vacuum enclosure; a second vacuum enclosure comprising an inlet in fluid communication with the exhaust of the first vacuum enclosure and arranged to be maintained at a pressure less than atmosphere for reducing the pressure at the outlet of the first vacuum enclosure, the second vacuum enclosure comprising an exhaust through which gas can be pumped for maintaining the second vacuum enclosure at a pressure less than atmosphere.

In examples of the invention the second vacuum enclosure provides a backing or roughing pressure for the first vacuum pumping arrangement for reducing the energy required by the first vacuum pumping arrangement. As the first vacuum enclosure is essentially a closed system there is little gas flow from the first vacuum enclosure to the second vacuum enclosure. Therefore, it is sufficient that the second vacuum enclosure is evacuated only periodically in order to maintain it at a desired pressure. In this regard, if the first vacuum pumping arrangement comprises a regenerative or molecular drag pumping mechanism it may be desirable that it exhausts at between about 20 to 100 mbar and therefore the second vacuum enclosure should be periodically evacuated to maintain this pressure. The periodic intervals between these evacuations are indeterminate for example the second vacuum closure may be evacuated hourly, daily, or weekly, or may be evacuated when a second vacuum pumping arrangement is experiencing a downtime, or when a vehicle is serviced, charged with fuel or electricity, or at specific geographical locations.

The vehicle part which dissipates energy may be the same or a different part to the one that receives energy. The flywheel stores energy by rotation in proportion to its inertia and the square of its rotational speed and may receive energy mechanically from a rotating part of the vehicle or alternatively may be driven by an electrical motor and a generator which converts mechanical energy to electrical energy for driving the motor.

A valve arrangement may be in fluid communication with the exhaust of the second vacuum enclosure for controlling the flow of gas through the exhaust. Typically, the valve arrangement is a one way valve for resisting the flow of gas upstream towards the second vacuum enclosure

A second vacuum pumping arrangement may be in fluid communication with the valve arrangement and operable with the valve arrangement for pumping gas from the second vacuum enclosure through the exhaust for maintaining the second vacuum enclosure at a pressure less than atmosphere. In examples of the invention, the second vacuum pumping arrangement may form part of the vehicle, may have a secondary function in the vehicle (for example as part of a braking system) or may be external to and separate from the vehicle.

If the second vacuum pumping arrangement is not included in the vehicle itself, there may be provided a flow line downstream of the valve arrangement which comprises a connector for selective sealed connection with a vacuum line or second vacuum pumping arrangement separate from the vehicle. The valve arrangement may then be operable when connected to cause flow of gas through the exhaust of the second vacuum enclosure for maintaining the second vacuum enclosure at a pressure less than atmosphere. An example of this arrangement may include the provision of a vacuum line or second vacuum pumping arrangement at a gas or petrol station, or charging point, whereby a sealed connection is made for evacuating the second vacuum enclosure coterminous with filling the vehicle with fuel or charging the battery.

A controller may be provided which is configured to control flow of gas from the second vacuum enclosure. The controller may be a processing unit or form part of a vehicle CPU which is connected to the valve arrangement and/or the second vacuum pumping arrangement to emit a signal for initiating enclosure evacuation. The controller may be responsive to an event for initiating evacuation such as the availability of redundant capacity in the second vacuum pumping arrangement or to a sensed pressure in the second vacuum enclosure.

The first vacuum pumping arrangement may comprise a regenerative pumping mechanism and/or a molecular drag pumping mechanism.

The second vacuum pumping arrangement may comprise a scroll pumping mechanism or a diaphragm pumping mechanism, or an air ejector pumping mechanism. In this last example, a compressed air system of the vehicle may feed air to the air ejector pumping mechanism.

The second vacuum pumping arrangement may be operable to provide a vacuum for use by a separate sub-system of the vehicle at a pressure of at least 100 mbar.

Advantageously, the second vacuum enclosure may contain a material, such as a molecular sieve, for absorbing gas or water vapour exhausted from the first vacuum enclosure.

In a second aspect, the present invention provides a vehicle comprising a kinetic energy recovery system comprising: a flywheel supported for rotation on a shaft in a first vacuum enclosure for receiving energy from and dissipating energy to one or more parts of the vehicle; a first vacuum pumping arrangement comprising a vacuum pumping mechanism supported for rotation on the shaft in the first vacuum enclosure such that energy received from or dissipated to one or more parts of the vehicle causes a change in rotational speed of both the flywheel and the vacuum pumping mechanism, the first vacuum pumping arrangement arranged to exhaust gas through an outlet in the first vacuum enclosure; a second vacuum enclosure comprising an inlet in fluid communication with the exhaust of the first vacuum enclosure and arranged to be maintained at a pressure less than atmosphere for reducing the pressure at the outlet of the first vacuum enclosure, the second vacuum enclosure comprising an exhaust through which gas can be pumped for maintaining the second vacuum enclosure at a pressure less than atmosphere; and a second vacuum pumping arrangement and a valve arrangement operable for periodic evacuation of the second vacuum enclosure.

In a third aspect, the present invention provides a vehicle and base station combination comprising a kinetic energy recovery system for recovering kinetic energy of the vehicle, the vehicle comprising: a flywheel supported for rotation on a shaft in a first vacuum enclosure for receiving energy from and dissipating energy to one or more parts of the vehicle; a first vacuum pumping arrangement comprising a vacuum pumping mechanism supported for rotation on the shaft in the first vacuum enclosure such that energy received from or dissipated to one or more parts of the vehicle causes a change in rotational speed of both the flywheel and the vacuum pumping mechanism, the first vacuum pumping arrangement arranged to exhaust gas through an outlet in the first vacuum enclosure; a second vacuum enclosure comprising an inlet in fluid communication with the exhaust of the first vacuum enclosure and arranged to be maintained at a pressure less than atmosphere for reducing the pressure at the outlet of the first vacuum enclosure, the second vacuum enclosure comprising an exhaust through which gas can be pumped for maintaining the second vacuum enclosure at a pressure less than atmosphere; a valve arrangement in fluid communication with the exhaust of the second vacuum pumping arrangement for controlling the flow of gas through the exhaust; a first flow line downstream of the valve arrangement comprising a first connector for selective sealed connection with a vacuum line or second vacuum pumping arrangement separate from the vehicle the valve arrangement being operable when connected to cause flow of gas through the exhaust of the second vacuum enclosure for maintaining the second vacuum enclosure at a pressure less than atmosphere; the base station comprising a second vacuum pumping arrangement and a second flow line in fluid communication with an inlet of the second vacuum pumping arrangement, the second flow line comprising a second connector, the first and second connectors being configured to form a sealed connection so that gas can be exhausted from the second vacuum enclosure through the first and second flow lines when the vehicle is located at the base station.

In a fourth aspect, the present invention provides a method of operating a kinetic energy recovery system, the system comprising: a flywheel supported for rotation on a shaft in a first vacuum enclosure for receiving energy from and dissipating energy to one or more parts of a vehicle; a first vacuum pumping arrangement comprising a vacuum pumping mechanism supported for rotation on the shaft in the first vacuum enclosure such that energy received from or dissipated to one or more parts of the vehicle causes a change in rotational speed of both the flywheel and the vacuum pumping mechanism, the first vacuum pumping arrangement arranged to exhaust gas through an outlet in the first vacuum enclosure; a second vacuum enclosure comprising an inlet in fluid communication with the exhaust of the first vacuum enclosure and arranged to be maintained at a pressure less than atmosphere for reducing the pressure at the outlet of the first vacuum enclosure, the second vacuum enclosure comprising an exhaust through which gas can be pumped to evacuate the second vacuum enclosure; wherein the method comprises periodically connecting for fluid communication the exhaust of the second vacuum enclosure with a second vacuum pumping arrangement and evacuating the second vacuum enclosure to a pressure less than atmosphere, preferably between 10 and 150 mbar.

Preferred or optional aspects of the invention are defined in the accompanying claims.

In order that the present invention may be well understood, some embodiments thereof, which are given by way of example only, will now be described with reference to the accompanying drawing, in which:
Figure 1 is a schematic representation of a vehicle comprising a recovery system;
   and
Figure 2 is a schematic representation of a vehicle and base station combination comprising a recovery system.

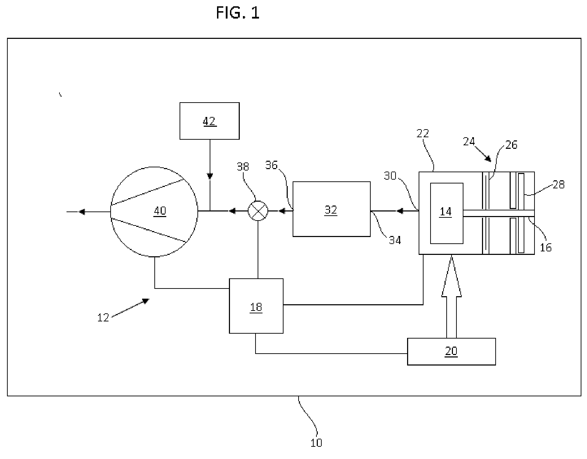

Referring to Figure 1, a vehicle 10 is shown schematically, which may be an automotive land vehicle, or other type of vehicle in which it is of benefit to capture kinetic energy of the vehicle and selectively release it for improving the performance of the vehicle or conserving energy. Recovery systems of this type are particularly prevalent in racing cars, although they have increasing applicability to energy conservation generally, for example public transportation buses.

Whilst not shown the vehicle typically comprises a plurality of wheels, an engine or power source for driving rotation of the wheels for increasing the vehicles speed, a vehicle drive shaft for transmitting energy from the engine to the wheels and a braking arrangement for reducing rotation of the wheels for decreasing propulsion. Some of these elements may be replaced in other types of vehicle, such as air or water borne vehicles.

The vehicle 10 comprises a kinetic energy recovery system (KERS) 12 having a flywheel 14 supported for rotation by a flywheel shaft 16. The flywheel is arranged to receive energy from a part of the vehicle, such as a drive shaft 20 or other internally moving or rotating part, driven by a vehicle motor, engine or battery and dissipate energy to one or more parts of the vehicle, whether that is the same part or a different part or subsystem of the vehicle.

The recovery system may receive mechanical energy from a rotating or other internally moving part of the vehicle by mechanical connection with that part. Alternatively or additionally, the energy received by the recovery system may be received by an electrical connection. In this latter regard, a part of the vehicle which has kinetic energy may transfer its energy to electrical energy, for example by an alternator, and that electrical energy drives a motor of the flywheel. The arrangement of Figure 1 applies equally to mechanical or electrical transfer of energy to or from the recovery system.

Referring again to Figure 1, the recovery system 12 is selectively connected or disconnected from the vehicle part 20, dependent on whether the flywheel is imparting or receiving mechanical or electrical energy in a connected condition or if the recovery system is isolated from other parts from the vehicle in a disconnected condition.

The KERS of a vehicle receives energy from other parts of the vehicle when the energy is not otherwise usefully required and returns energy to other parts of the vehicle when it is usefully required.

In Figure 1, the drive shaft 20 is represented schematically as a moving part of the vehicle having kinetic energy for connection with the KERS as shown by the arrow in the drawing. In a mechanical arrangement the flywheel 14 is connected by a gear mechanism for geared rotation of the drive shaft relative to the flywheel. In this regard, the flywheel is typically arranged to rotate faster than the rotating part of the vehicle, for example between about 50,000 and 100,000 rpm compared to the drive shaft which may rotate at about 1000 to 20,000 rpm. A control 18 controls connection between the vehicle part 20 and the KERS 12 according to determined characteristics of the vehicle or system or to input by a user of the system. In this regard, the control may receive input from one or more sensors of the vehicle (not shown) to determine operation of the KERS in any one of the energy receiving condition, energy imparting condition or the disconnected condition. These characteristics include by way of example the relative rotational speed or momentum of the flywheel 14 and the rotating part 20, acceleration of the vehicle, engine air compressor or the state of other subsystems of the vehicle. The control 18 may be a specially programmed digital processing unit forming part of a vehicle management system or may be a bespoke unit for controlling activation of the KERS.

In an alternative arrangement, the system may convert mechanical energy to electrical energy, by for example an alternator, for use by an electrical motor for driving rotation of the flywheel. The motor may form part of the KERS and the alternator may be part of a separate sub-system of the vehicle. Mechanical energy from the flywheel may be transferred directly to a moving or rotating part of the vehicle or may first be converted to electrical energy for transfer to the moving or rotating part or for use by an electrical component for example by an electric motor in a hybrid vehicle.

In a further alternative arrangement, the KERS comprises an electrical motor and generator arrangement which in combination can receive either electrical or mechanical energy for transmission to the flywheel or dissipate mechanical or electrical energy from the flywheel. In this alternative arrangement, the connection to the flywheel is electrical and therefore the vacuum enclosure can be substantially sealed reducing leakage of gas from the enclosure.

Referring in more detail to Figure 1, in KERS 12 the flywheel 14 is supported for rotation on shaft 16 in a first vacuum enclosure 22 for receiving energy from and dissipating energy to one or more parts of the vehicle 10. The first vacuum enclosure is sealed and is a generally closed system. There is some leakage of gas into the enclosure but mainly the pressure in the enclosure increases due to outgassing from components within the enclosure such as those made from carbon fibre. Therefore once the enclosure is evacuated to a desired pressure of for example 0.01 mbar the pressure increases slowly.

A first vacuum pumping arrangement 24 comprises a vacuum pumping mechanism 26, 28 supported for rotation on the shaft such that energy received from or dissipated to one or more parts of the vehicle causes a change in rotational speed of both the flywheel 14 and the vacuum pumping mechanism 26, 28. During normal use, the first vacuum pumping arrangement exhausts the gas that accumulates slowly in the first vacuum enclosure through an outlet 30. At an initial condition when the first vacuum enclosure is at or close to atmosphere, the first vacuum pumping arrangement can be operated to decrease the pressure to a desired pressure, even though it operates more inefficiently when exhausting at atmosphere, or alternatively the first vacuum enclosure can be evacuated at start-up by other vacuum means.

A second vacuum enclosure 32 comprises an inlet 34 in fluid communication with the outlet 30 of the first vacuum enclosure 22. The second vacuum enclosure is arranged to be maintained at a pressure less than atmosphere for reducing the pressure at the outlet of the first vacuum enclosure. A reduction in pressure at the outlet 30 increases the efficiency of the first vacuum pumping arrangement 24. The desired pressure in the second vacuum enclosure depends on characteristics of the KERS system and in particular the first pumping mechanisms 26, 28. In this example, the pumping mechanisms may be one or both of a molecular drag mechanism or regenerative mechanism capable of producing a pressure of around 0.01 mbar in the first vacuum enclosure and exhausting efficiently at a pressure of around 20 to 100 mbar. Therefore the desired pressure in the second vacuum enclosure is around 20 to 100 mbar.

In one example, the second vacuum enclosure contains a material, such as a molecular sieve, for absorbing gas exhausted from the first vacuum enclosure.

The second vacuum enclosure comprises an exhaust 36 through which gas can be pumped periodically at indeterminate intervals for maintaining the second vacuum enclosure 32 at the desired vacuum pressure. In the arrangement, the second vacuum enclosure backs the first vacuum pumping arrangement 24. That is, the second vacuum enclosure provides the functions of a backing or roughing pump to allow the first vacuum pumping arrangement to exhaust at a pressure lower than atmosphere. The advantage of the present arrangement is that it omits the requirement for a pump provided specifically for the purpose of backing the first vacuum pumping arrangement and therefore costs are reduced. Further, as the flow or quantity of gas being pumped is low, the second vacuum enclosure can be evacuated relatively infrequently by a second vacuum pumping arrangement (discussed in more detail below), which may be an existing part of a vehicle or even located away from the vehicle. The periodical requirement for evacuation depends on factors such as the amount that the KERS is used, the type of use, and other characteristics of the system.

A valve arrangement 38 is in fluid communication with the exhaust 36 of the second vacuum enclosure 32 for controlling the flow of gas through the exhaust. In one arrangement, the valve is actuated by the controller 18 to open or close, or partially open. The valve is opened when evacuation of vacuum enclosure 32 is required and closed when a desired pressure has been attained. In another example, the valve arrangement is a one way valve for resisting the flow of gas upstream towards the second vacuum enclosure. In this example to flow through the valve only when pressure downstream of the valve is lower than pressure upstream of the valve.

A second vacuum pumping arrangement 40 is in fluid communication with the valve arrangement 38 and therefore the second vacuum enclosure 32 through the valve arrangement. The second vacuum pumping arrangement is operable with the valve arrangement for pumping gas from the second vacuum enclosure through the exhaust 36 for maintaining the second vacuum enclosure at the desired pressure.

The second vacuum pumping arrangement 40 may have a one or more further functions in the vehicle for generating a vacuum pressure in a vehicle part or parts 42. If in this example the second vacuum pumping arrangement is not used constantly for the further function it has redundant capacity which can be used to evacuate the second vacuum enclosure 32. If the controller 18 may be arranged to receive a signal from the second vacuum pumping arrangement 40 when such redundant capacity is available and to operate the valve arrangement 38 for evacuating the second vacuum enclosure 32.

In examples, the second vacuum pumping arrangement 40 comprises a scroll pumping mechanism or a diaphragm pumping mechanism. In another example, the second vacuum pumping arrangement comprises an air ejector pumping mechanism. A compressed air system of the vehicle feeds air to the air ejector pumping mechanism.

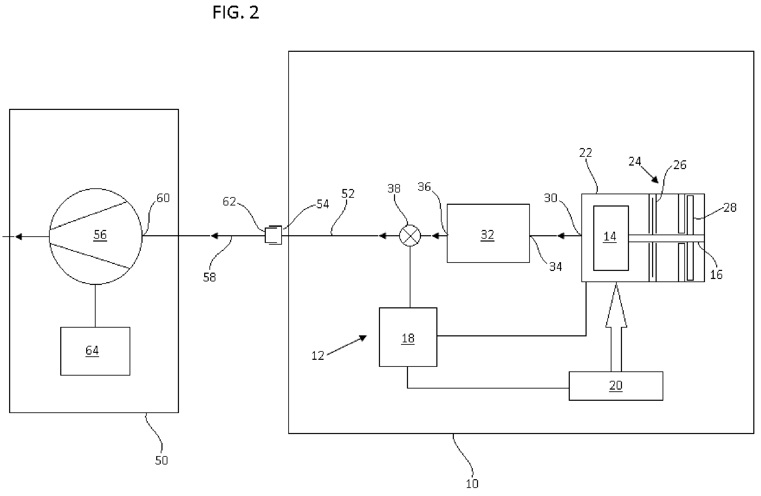

In another example of the invention shown in Figure 2, the second vacuum pumping arrangement is remote from the vehicle 10 and located at a base station 50.

The KERS 12 in Figure 2 comprises a flow line, or gas conduit, 52 downstream of the valve arrangement 38. The flow line is provided at an end portion with a connector 54 for selective sealed connection with a vacuum line or second vacuum pumping arrangement 56 separate from the vehicle and in or at the base station 50. The valve arrangement 38 is operable (e.g. by controller 18) when connected to cause flow of gas through the exhaust 36 of the second vacuum enclosure 32 for maintaining the second vacuum enclosure at the desired pressure.

The base station 50 comprises a second flow line, or gas conduit, 58 in fluid communication with an inlet 60 of the second vacuum pumping arrangement 56. The second flow line comprises a second connector 62. As shown schematically the first and second connectors 54, 62 are configured to form a sealed connection so that gas can be exhausted from the second vacuum enclosure 32 through the first and second flow lines 52, 58 when the vehicle 10 is located at the base station 50. In this example, the first connector may comprise a female connecting part which engages with a male connecting part of the second connector. The connecting parts may comprise a sealing mechanism such as an O-ring seated in an annular channel for forming an airtight connection. The connectors may form a push or screw fit connection with complementary engaging formations.

A controller 64 is provided in this example to control activation of the second vacuum pumping arrangement 56 responsive to a connection between the connectors 54, 62.

The base station 50 is typically at a fixed location and evacuation occurs when the vehicle is located at the base station. Therefore there is no requirement for the vehicle to carry a second vacuum pumping arrangement during normal use. The base station may be for example a gas or petrol station, bus depot, garage, or pit-lane. In some arrangements, the base station may comprise a plurality of flow lines 58 and connectors 62 for evacuating a respective plurality of second vacuum enclosure is 32 at the same time. There may be provided more than one second vacuum pumping arrangement 56 at the base station or a single second vacuum pumping arrangement having a multiplicity of flow lines extending therefrom. The base station may itself include a vacuum enclosure evacuated by a vacuum pump for connection to the vehicle for evacuating the second vacuum enclosure 32.

Key to Figures
- 10.: Vehicle (bus, racing car etc.)
- 12.: Kinetic Energy Recovery System (KERS)
- 14.: Flywheel
- 16.: Flywheel Shaft
- 18.: Controller
- 20.: Rotating Vehicle Part (Drive Shaft etc.)
- 22.: First Vacuum Enclosure
- 24.: First Vacuum Pumping Arrangement
- 26.: Pump mechanism
- 28.: Pump Mechanism
- 30.: First Vacuum Enclosure Outlet
- 32.: Second Vacuum Enclosure
- 34.: Second Vacuum Enclosure Inlet
- 36.: Second Vacuum Enclosure Exhaust
- 38.: Valve Arrangement
- 40.: Second Vacuum Pumping Arrangement
- 42.: Vehicle Part(s)
- 50.: Base Station
- 52.: Flow Line
- 54.: Connector
- 56.: Second Pumping Arrangement
- 58.: Flow Line
- 60.: Inlet
- 62.: Second Connector
- 64.: Controller

## Claims

1. A kinetic energy recovery system comprising:
a flywheel supported for rotation on a shaft in a first vacuum enclosure for receiving energy from and dissipating energy to one or more parts of a vehicle;
a first vacuum pumping arrangement comprising a vacuum pumping mechanism supported for rotation on the shaft in the first vacuum enclosure such that energy received from or dissipated to one or more parts of the vehicle causes a change in rotational speed of both the flywheel and the vacuum pumping mechanism, the first vacuum pumping arrangement arranged to exhaust gas through an outlet in the first vacuum enclosure;
a second vacuum enclosure comprising an inlet in fluid communication with the exhaust of the first vacuum enclosure and arranged to be maintained at a pressure less than atmosphere for reducing the pressure at the outlet of the first vacuum enclosure, the second vacuum enclosure comprising an exhaust through which gas can be pumped periodically at indeterminate intervals for maintaining the second vacuum enclosure at a pressure less than atmosphere.

2. A kinetic energy recovery system as claimed in claim 1, comprising a valve arrangement in fluid communication with the exhaust of the second vacuum enclosure for controlling the flow of gas through the exhaust.

3. A kinetic energy recovery system as claimed in claim 2, wherein the valve arrangement is a one way valve for resisting the flow of gas upstream towards the flywheel.

4. A kinetic energy recovery system as claimed in claims 2 or 3, comprising a second vacuum pumping arrangement in fluid communication with the valve arrangement and operable with the valve arrangement for pumping gas from the second vacuum enclosure through the exhaust for maintaining the second vacuum enclosure at a pressure less than atmosphere.

5. A kinetic energy recovery system as claimed in claims 2 or 3, comprising a flow line downstream of the valve arrangement comprising a connector for selective sealed connection with a vacuum line or second vacuum pumping arrangement separate from the vehicle the valve arrangement being operable when connected to cause flow of gas through the exhaust of the second vacuum enclosure for maintaining the second vacuum enclosure at a pressure less than atmosphere.

6. A kinetic energy recovery system as claimed in any of the preceding claims, comprising a controller configured to control flow of gas from the second vacuum enclosure.

7. A kinetic energy recovery system as claimed in any of the preceding claims, wherein the first vacuum pumping arrangement comprises a regenerative pumping mechanism or a molecular drag pumping mechanism.

8. A kinetic energy recovery system as claimed in any of claims 4 to 7, wherein the second vacuum pumping arrangement comprises a scroll pumping mechanism or a diaphragm pumping mechanism.

9. A kinetic energy recovery system as claimed in any of claims 4 to 8, wherein the second vacuum pumping arrangement comprises an air ejector pumping mechanism.

10. A kinetic energy recovery system according to claim 9, wherein a compressed air system of the vehicle feeds air to the air ejector pumping mechanism.

11. A kinetic energy recovery system as claimed in any of claims 4 to 10, wherein the second vacuum pumping arrangement is operable to provide a vacuum for use by a separate sub-system of the vehicle at a pressure of at least?.

12. A kinetic energy recovery system as claimed in any of the preceding claims, wherein the second vacuum enclosure contains a material for absorbing gas or vapour exhausted from the first vacuum enclosure.

13. A vehicle comprising a kinetic energy recovery system comprising:
a flywheel supported for rotation on a shaft in a first vacuum enclosure for receiving energy from and dissipating energy to one or more parts of the vehicle;
a first vacuum pumping arrangement comprising a vacuum pumping mechanism supported for rotation on the shaft in the first vacuum enclosure such that energy received from or dissipated to one or more parts of the vehicle causes a change in rotational speed of both the flywheel and the vacuum pumping mechanism, the first vacuum pumping arrangement arranged to exhaust gas through an outlet in the first vacuum enclosure;
a second vacuum enclosure comprising an inlet in fluid communication with the exhaust of the first vacuum enclosure and arranged to be maintained at a pressure less than atmosphere for reducing the pressure at the outlet of the first vacuum enclosure, the second vacuum enclosure comprising an exhaust through which gas can be pumped for maintaining the second vacuum enclosure at a pressure less than atmosphere;
a second vacuum pumping arrangement and a valve arrangement operable for periodic evacuation of the second vacuum enclosure.

14. A vehicle and base station combination comprising a kinetic energy recovery system for recovering kinetic energy of the vehicle, the vehicle comprising:
a flywheel supported for rotation on a shaft in a first vacuum enclosure for receiving energy from and dissipating energy to one or more parts of the vehicle;
a first vacuum pumping arrangement comprising a vacuum pumping mechanism supported for rotation on the shaft in the first vacuum enclosure such that energy received from or dissipated to one or more parts of the vehicle causes a change in rotational speed of both the flywheel and the vacuum pumping mechanism, the first vacuum pumping arrangement arranged to exhaust gas through an outlet in the first vacuum enclosure;
a second vacuum enclosure comprising an inlet in fluid communication with the exhaust of the first vacuum enclosure and arranged to be maintained at a pressure less than atmosphere for reducing the pressure at the outlet of the first vacuum enclosure, the second vacuum enclosure comprising an exhaust through which gas can be pumped for maintaining the second vacuum enclosure at a pressure less than atmosphere;
a valve arrangement in fluid communication with the exhaust of the second vacuum pumping arrangement for controlling the flow of gas through the exhaust;
a first flow line downstream of the valve arrangement comprising a first connector for selective sealed connection with a vacuum line or second vacuum pumping arrangement separate from the vehicle the valve arrangement being operable when connected to cause flow of gas through the exhaust of the second vacuum enclosure for maintaining the second vacuum enclosure at a pressure less than atmosphere;
the base station comprising a second vacuum pumping arrangement and a second flow line in fluid communication with an inlet of the second vacuum pumping arrangement, the second flow line comprising a second connector, the first and second connectors being configured to form a sealed connection so that gas can be exhausted from the second vacuum enclosure through the first and second flow lines when the vehicle is located at the base station.

15. A method of operating a kinetic energy recovery system, the system comprising:
a flywheel supported for rotation on a shaft in a first vacuum enclosure for receiving energy from and dissipating energy to one or more parts of a vehicle;
a first vacuum pumping arrangement comprising a vacuum pumping mechanism supported for rotation on the shaft in the first vacuum enclosure such that energy received from or dissipated to one or more parts of the vehicle causes a change in rotational speed of both the flywheel and the vacuum pumping mechanism, the first vacuum pumping arrangement arranged to exhaust gas through an outlet in the first vacuum enclosure;
a second vacuum enclosure comprising an inlet in fluid communication with the exhaust of the first vacuum enclosure and arranged to be maintained at a pressure less than atmosphere for reducing the pressure at the outlet of the first vacuum enclosure, the second vacuum enclosure comprising an exhaust through which gas can be pumped to evacuate the second vacuum enclosure;
wherein the method comprises periodically connecting for fluid communication the exhaust of the second vacuum enclosure with a second vacuum pumping arrangement and evacuating the second vacuum enclosure to a pressure less than atmosphere.

16. A method as claimed in claim 15, comprising periodically evacuating the second enclosure to a pressure between 10 and 150 mbar.
